# EUROPEAN PATENT SPECIFICATION

(11) **EP 0 299 597 B1**
(45) Date of publication and mention of the grant of the patent: **20.07.1994**
(21) Application number: 88303874.7
(22) Date of filing: 28.04.1988
(51) Int. Cl.: C12H 1/06

(54) **Method and apparatus for removing tartrates or like impurities**
Verfahren und Vorrichtung für die Entfernung von Tartraten oder ähnlichen Verunreinigungen
Procédé et appareil pour l'élimination des tartrates ou d'impuretés similaires

(30) Priority: 28.04.1987 JP 105998/87
(43) Date of publication of application: 18.01.1989
(73) Proprietor: SUNTORY LIMITED, Kita-ku, Osaka-shi, Osaka-fu 530 (JP); KANSAI CHEMICAL ENGINEERING CO. LTD, Amagasaki-shi Hyogo 660 (JP)
(72) Inventor: Tazawa, Toshiaki, Ibaraki-shi Osaka (JP); Yotsumoto, Masahiro, Kanagawa-ku Yokohama-shi Kanagawa-ken (JP); Tanahashi, Hiroshi, Mishima-gun Osaka (JP); Wakabayashi, Yuzuru, Amagasaki-shi Hyogo-ken (JP)
(74) Representative: Senior, Alan Murray

(56) References cited:
- EP-A- 0 216 702
- DE-A- 2 408 776
- DE-A- 3 244 221
- FR-A- 1 090 410
- FR-A- 1 393 587
- FR-A- 1 445 096
- GB-A- 1 530 849

## Description

The present invention relates generally to the removal or separation of tartar from wine or grape juice and more specifically to an improved process therefor.

It often occurs that despite extensive trouble being taken to remove tartars from wine, grape juice and the like liquid beverages prior to bottling, precipitates tend to form and settle in bottles while sitting on shelves after filling. These precipitates detract from the appearance of the product and thus reduce the marketablility thereof.

It is accordingly highly desirable to prevent such a phenomenon.

Various methods of removing tartars have been proposed. These methods include cooling, cation exchange, anion exchange, reverse osmosis, and electrodialysis. It has also been proposed to inhibit precipitation via the addition of selected additives.

Of the above-mentioned techniques cooling alone has found commercial application, the others encountering drawbacks which detract from and/or prevent their use.

Among the various cooling techniques, a method based on primary nucleation of potassium hydrogentartarate, which is a major component of tartar, is known. However, this method requires the maintainance of supersaturated solutions for prolonged periods in order to induce the natural nucleation.

Accordingly, a large initial capital investment in cooling and storage equipment is necessary. Further, with this method it is not possible to quickly meet quick and/or unexpected increases in market demand.

Another cooling method has endeavoured to increase the tartar concentration by reducing the temperature of the wine and concentrating the same in order to accelerate nucleation. However, this method does not enable steady removal and further increases the cost of the initial equipment costs.

To accelerate natural crystal growth, some cooling methods have included seeding the wine with tartar crystals and then separating the crystals and the refined liquor. These seeding methods can be divided into two categories - (1) the contact method and (2) carrier adhesion method.

An example of the first method is disclosed in DE-A-3244221 of Westfalia Co. This document discloses a process in which seed crystals of potassium hydrogentartarate and dipotassium DL-tartarate are added to precipitate and remove calcium ions which inhibit the growth of tartar crystals. An example of the second technique is disclosed in JP-A-56-5157(1981) filed by Henkel and Co., wherein a process is disclosed in which calcium carbonate is used as the seeding material. In the method disclosed in this document tartar crystals are induced to adhere to fibres and the like which act as carriers and therefore facilitate the removal of the crystals.

In addition to the above, draft tube baffled crystallizers (hereinafter referred to as DTB crystallizers) of the type used in general crystallization processes have been experimented with.

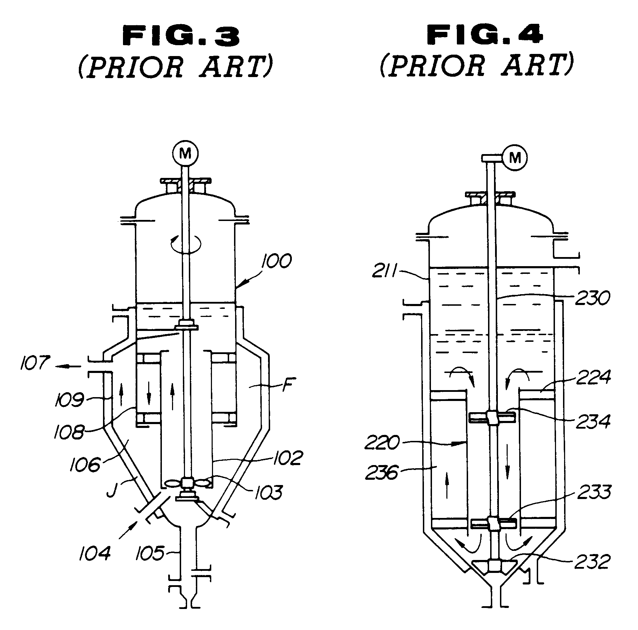

A typical DTB crystallizer is shown in Fig. 3. As will be appreciated this device includes an upright cylindrical vessel 100 in which a draft tube 102 is supported. A propeller 103 is mounted at the bottom of the draft tube 102. This propeller 103 is driven by motor M via a propeller shaft (no numeral). A second tube 108 is arranged concentrically about the draft tube 102 in a manner to define an essentially annular cross-section passage.

The rotation of the propeller 103 is arranged to induce an flow which proceeds from the bottom of the vessel 100 upwardly within the draft tube 102. This flow induces a corresponding downward flow through the annular crystallization zone or space defined between the tubes 102, 108. The flow moves toward the bottom of the vessel and tends to be reinducted into the upwardly moving flow passing through the draft tube 102. This of course defines a so called "fast rise - slow fall" crystallization cycle.

The numeral 105 denotes a classification leg via which separation can be effected while the numeral 106 denotes the entrace of a fines trap zone F. As will be understood the tube 108 also acts as a baffle which promotes separation of the larger well developed crystals which tend to be entrained in the circulating flow which passes about the draft tube and the fines.

A cooling jacket J is provided about the vessel in the illustrated manner. Low temperature coolant is circulated through this jacket in a manner which lowers the temperature of liquid in the vessel.

However, tests revealed the above-mentioned conventional type of DTB crystallizer to be unsuited to the task of removing tartar from wine. The reason for this is deemed to be that the above mentioned DTB devices are basically designed to produce crystals which are removed from the bottom of the vessel via the classification leg 105 rather than purifiy the liquid in which the crystals are grown.

In addition to this the rather complex interior of these devices makes difficult cleaning and like santitation measures which are necessary in order to ensure that the beverages produced in the device remain fit for human consumption.

In order to overcome these difficulties a DTB arrangement of the nature disclosed in EP-A-0 216 702 has been proposed. In this arrangement (see Fig. 4) a single draft tube 220 is disposed in a relatively low concentric position in an essentially upright cylindrical vessel 211 by supports 224. A stirring arrangement included a motor M, a stirrer shaft 230 and three propellers 232, 233 and 234 mounted on the shaft. The propeller 232 is arranged to produce an upwardly moving flow while the other two downwardly moving ones. When this arrangement is put into operation the propellers 233 and 234 induct liquid from a zone above the draft tube 220 and move the same toward the bottom of the vessel. The flow upon reaching the bottom of the draft tube 220 interacts with the upwardly moving flow which is produced by the bottommost propeller 232. This induces the flow to curl upwardly as shown, and subsequently rise through the annular passage 236 defined between the interior of the vessel 211 and the exterior of the draft tube 220.

Upon the flow reaching the level of top of the draft tube, some of the flow is re-inducted into the draft tube 220 to establish a kind of closed loop continous circulation pattern. Seeding is added to the liquid in the vessel. The seed crystals grow in the upwardly moving flow which passes through the annular passage 236 and thus extract the corresponding material from the liquid under purification.

However, this arrangement while enabling continous removal of tartar crystals from wine, grape juice and the like type of liquids, and enabling liquid tapped off from the device to be relatively clear, has suffered from the drawback that, as there is only one draft tube 220 in the device, the discharge flow rate increases beyond certain limits and the upper layer of liquid in classification zone defined in the upper portion of the device becomes so disturbed that complete classification of the crystals does not occur and an unacceptably large amount of tartar crystals tend to be carried up to the overflow or discharge port in a manner which tends to defeat the purpose of the process.

Accordingly, it is an object of the present invention to provide a system which can successfully remove tartar or the like material from liquids such as those intended for bottling and/or human consumption, the system being such that rapid processing of large volumes of liquids can be conducted without fear of crystals finding their way into the final product.

According to one aspect of the present invention there is provided a processing system for removing crystallizable material from liquid, the system comprising a source liquid vessel for storing source liquid, a crystallizer, a finished product vessel for receiving and storing processed liquid from which crystallizable material has been removed, and a first separating arrangement interposed between the crystallizer and the finished product vessel, said first separating arrangement being arranged to separate the liquid from the crystallizer into a first clear fraction and a second fraction containing crystalline solid, characterised in that the system further comprises a second separator fluidly connected with said first separating arrangement for receiving the second fraction and for separating it into a second clear fraction for supply to the finished product vessel and a fraction concentrated with crystalline solid, and valve and conduit means including a valve arrangement for directing the first clear fraction from the first separating arrangement to the finished product vessel and for selectively guiding the second fraction either back to the crystallizer or to said second separator.

According to a second aspect of the present invention there is provided a method of removing crystallizable material from liquid, the method comprising:
storing source liquid in a source liquid vessel;
receiving and storing processed liquid in a finished product vessel;
removing a substance from the source liquid using a crystallizer;
separating the liquid from the crystallizer into a first clear fraction and a second fraction containing crystalline solid using a first separating arrangement interposed between the crystallizer and the finished product vessel; and
directing the first clear fraction to the finished product vessel;
characterised in that the method further comprises using valve and conduit means including a valve arrangement to selectively guide the second fraction either back to the crystallizer or to a second separator and, when the second fraction is being guided to the second separator, separating the second fraction in the second separator into a second clear fraction and a fraction concentrated with crystalline solid, directing the second clear fraction to the finished product vessel and directing the fraction concentrated with crystalline solid to suspension generating tanks.

The illustrated embodiment of system includes a multi-cyclone or the like type of separator which is combined with a fast fall - slow rise circulation type crystallizer. This combination permits continuous purification wherein a crystallizable substance is extracted by seeding the liquid and circulating the mixture in the crystallizer and any crystals which may overflow with the crystallizer effluent are removed by the cyclone arrangement. Additionally, the system can be run in a batch processing mode wherein when the source fluid is exhausted or limited in quantity, the content of the crystallizer can be drained and passed through the cyclone arrangement. Under these circumstances the crystal containing fraction which is released from the multi-cyclone separator is fed to a second separator for separation into a clear liquid and a fraction which is concentrated in crystalline solid. The latter mentioned fraction is collected in a vessel wherein a seeding suspension is prepared.

The features and attendant advantages of the present invention will become more clearly understood from the following description of the preferred arrangement, made in connection with the appended figures in which:
Fig. 1 is schematic diagram showing the plant arrangement which characterizes the embodiment of the present invention;
Fig. 2 is a sectional elevation of a crystallizer used in the arrangement depicted in Fig. 1;
Fig. 3 is a sectional elevation of the first prior art DTB crystallizer discussed in the opening paragraphs of the instant disclosure; and
Fig. 4 is a sectional elevation of the second DTB arrangement discussed in the opening paragraphs of the instant disclosure.

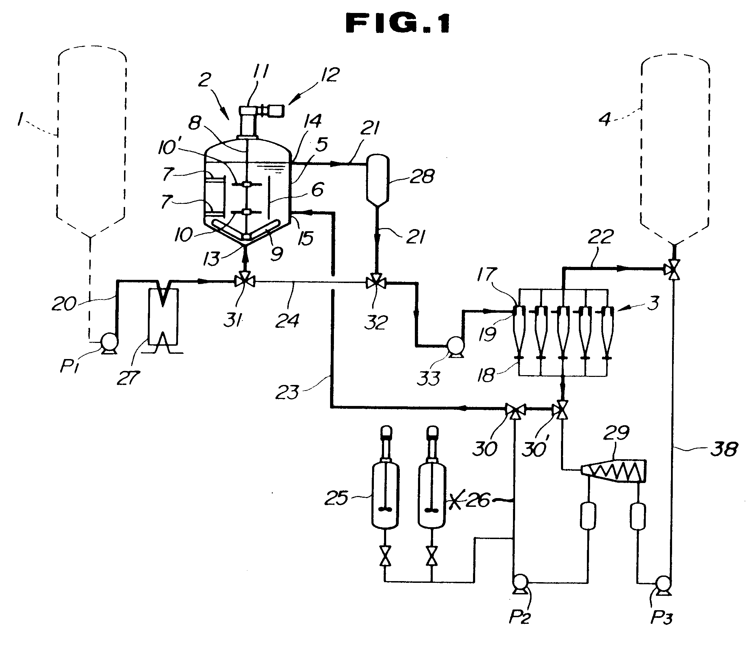

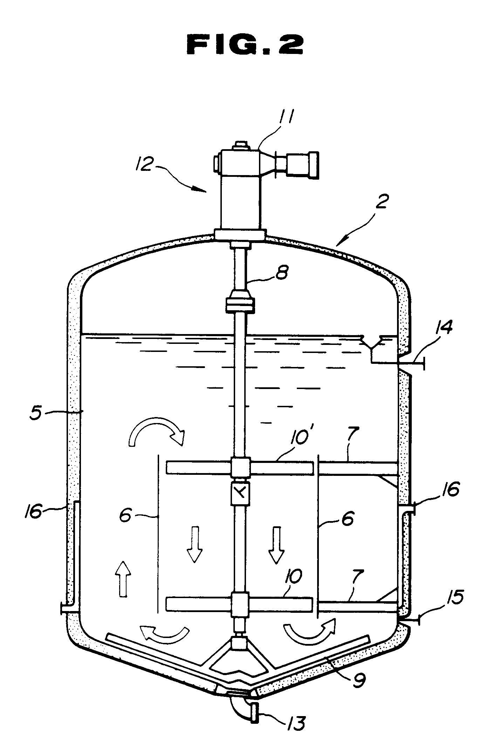

Figs. 1 and 2 show an embodiment of the present invention. In this arrangement a storage vessel 1 in which large a volume of wine or the like liquid (hereinafter referred to as source liquid) to be processed is stored; a crystallizer 2; a series of cyclone separators 3 (hereinafter referred to as a multi- cyclone arrangement) and a finished product storage vessel 4 for receiving the purified product, are interconnected by a valve and conduit arrangement which enables the required management of the unprocessed, semiprocessed and finished products.

The above mentioned multi-cyclone can be of any suitable convential commercially available design.

A recovery separator 29 (in this instance a screw decanter type separator) via which crystals are recovered and two (in this instance) preparation vessels 25 in which the crystals are subject to mixing and suspension, are also interconnected with the above mentioned plant by the valve and conduit arrangement.

It goes without saying that, for reasons of sanitation and the like, the system illustrated in Fig. 1 is mainly constructed of stainless steel or a like material which is resistant both to corrosion and reaction with the liquid being processed.

Fig. 2 shows in detail the crystallizer utilized in connection with the instant invention. As will be appreciated from this figure, the vessel 5 which defines the main body of the device takes the form of an essentially upright cylindrically shaped stainless steel container which is covered with a layer of suitable thermally insulating material.

A cylindrical draft tube 6 is suspended by supports 7 in the lower portion of the container 5 in a manner to be essentially coaxial therewith. A stirrer shaft 8 is arranged to extend essentially along the axes of the vessel 5 and draft tube 6. A large diameter impeller 9 or similar stirring member is connected to the lower end of the stirrer shaft 8. As shown, this impeller is arranged to be configured in a manner to have a shape similar to and to juxtapose the bottom of the vessel 5 in a manner which tends to "sweep" off any sediment which tends to settle there during the crystallization process. Two other propellers or like stirring members 10, 10' are connected to the shaft 8 and are arranged within the draft tube 6. In this arrangemement the two propellers 10 and 10' are disposed close to the bottom and top of the draft tube, respectively, and are arranged to induce flow downwardly through the draft tube. This downward flow, after approaching the bottom of the vessel, is induced to curl and to flow upwardly through the annular space defined between the outer periphery of the draft tube and the inner wall of the crystallizer vessel 5.

In the instant embodiment the length of the draft tube 6 is preferably 1/2 to 1/4 of the length of the vessel 5 while the diameter of the draft tube 6 is 1/2 to 1/3 of the diameter of the vessel 5.

This arrangement defines what is referred to as a fast-fall slow-rise circulation arrangement which is the reverse of that usually used in DTB crysallizers.

The vessel is provided with three ports 13, 14 and 15. The first of these is arranged to initially admit raw or totally unprocessed source liquid into the crystallizer, while the second one 14 is located near the top of the vessel and arranged to act as an overflow type discharge port via which relatively clear liquid can be tapped off. Port 15 on the other hand, is such as to permit the introduction of a suspension of seeding crystal into the source liquid during the initial stages of the purification process. In this arrangement port 15 is arranged to introduce the seed into the upwardly moving flow which passes through the zone in which the crystals develop.

It will be noted that with the instant invention the height of the crystallizer vessel 5 is reduced as compared with that of the arrangement shown in Fig. 4. The reason for this is that, as will become more clearly appreciated hereinafter, the provision of the multi-cyclone arrangement renders it unnecessary to define a classification zone per se within the vessel. Accordingly, the dimensions of the device can reduced and the vessel rendered more compact.

A cooling arrangement which in the embodiment takes the form of a coolant jacket 16 is formed about the lower port of the vessel 5 and is enclosed within the insulating layer. This jacket 16 is adapted to receive cold coolant which is provided by a source (not shown).

The illustrated system further includes a refrigerating arrangement 27 which is fluidly interposed between the source liquid storage vessel 1 and the cystallizer 2. This device is arranged in the instant system to reduce the temperature of the source liquid to a range in the order of 0 to -3°C and is located downsteam of source liquid supply pump P1 and upsteam of a valve arrangement 31. If so desired this device can be aranged to supply low temperature coolant to the coolant jacket 16 provided about the lower portion of the crystallizer vessel.

In this system the valve arrangement 31 can be conditioned to permit source liquid to be supplied into the crystallizer vessel 5 via port 13 or alternatively arrange for liquid in the vessel 5 to be drained into conduit 24 which leads from valve arrangement 31 via a second valve arrangement 32 to a pump 33.

The second valve arrangement 32 is arranged to be conditionable in a manner which allows liquid from a buffer tank 28 interposed between the second valve arrangement 32 and the overflow port 14 of the crystallizer vessel 5, for the purposes of compensating for flow fluctuations which occur, to be supplied to the induction port of the pump 33 via conduit 21; or alternatively the conduit 21 closed off and communication between the pump 33 and port 13 of the crystallizer vessel 5 established.

The system further includes pumps P2 and P3 and valve arrangements 30 and 30'. The latter mentioned valve arrangements are arranged downstream of the multi-cyclone arangement 3 and are designed to control the discharge fraction of the cyclone arrangement 3 which contains the crystalline solids in a manner that it can be selectively guided back to port 15 of the crystallizer vessel 5 in manner to maintain the concentration of seed crystals in the crystallizer 2, or selectively guided to the screw decanter type separator 29.

It is also possible to condition valve arrangement 30 to permit the suspension produced in the suspension generating vessels 25 to be fed to port 15.

The operation of the system is such that grape juice, wine or the like liquid is loaded into the source liquid storage or supply vessel 1. For the sake of explanation it will be assumed that the source liquid is a wine.

The source wine is firstly supplied to a refrigeration device 27 via conduit 20 and pump P1. The temperature of the liquid is reduced to within a range of 0 to -3°C and thereafter supplied to the supply port 13 of the crystallizer vessel 5. At the same time a suspension containing the seed crystals is supplied via conduits 23 and 26 to port 15 of the crystallizer. The seeding amount varies with the volume and temperature of the liquid under purification in the crystallizer.

For example, when the liquid is cooled down to approximately 0°C, 7-8 gram per liter is deemed adequate while in the event that the temperature is reduced to - 3°C, 3-4 g/l is deemed appropriate.

It should be noted that it is also possible to express the amount of seed with the concentration of potassium hydrogentartarate in the "source" liquid. Alternatively, the saturation temperature of the source liquid can be used as the determination of the concentration but this is somewhat complicated.

When motor 12 is energized the liquid in the crystallizer is induced to flow down through the draft tube 6 under the influence of the rotating propellers 10' 10 and then rise relatively slowly up around the exterior of the draft tube 6 in the manner indicated by the bold arrows. After rising up to the level of the top of the draft tube some of the upwardly moving flow is re-inducted into the draft tube to establish a closed loop type circulating flow.

By way of example, in the instant arrangement the stirrer shaft is arranged to rotate at or below about 100 RPM.

As the draft tube is disposed relatively low in the crystallizer vessel 5, the relatively dense seed crystals tend to collect in the lower part of the crystallizer and thus become entrained in the circulation.

Because of the re-induction of the upward flow into the draft tube 6, the zone located above the draft tube is subject to relatively little disturbance and thus defines a calm classification section or zone.

Most of the crystals which rise up above the level of the draft tube 6 soon tend to sink again and become re-entrained in the circulation.

The impeller-like stirring member 9 located adjacent the bottom of the crystallizer vessel 5 is such as to prevent crystals from settling thereon and thus maintains essentially all of the crystals in the circulating flow. During the circulation the crystals grow by removing the tartar from the source liquid and thus reduce the concentration of the same therein. In addition to this the seed crystals induce secondary nucleation of tartar crystals, the nuclei of which occur partially in the draft tube 6.

After being subject to purification in the above manner the liquid which overflows via port 14 is directed to the intake port 19 of the cyclone arrangement via buffer tank 28 and pump 33. As mentioned above, the buffer tank 28 is provided to permit changes in the amount of fluid flowing between the crystallizer 2 and the cyclone arrangement 3.

The cyclone arrangement 3 separates any crystals which may have been contained in the liquid tapped off from the overflow port 14 of the crystallizer 5 and discharges clear crystal-free liquid via the upper discharge ports 17 provided at the tops of the cyclones. This purified liquid is supplied into the finished product storage vessel 4 by way of conduit 22.

The liquid delivered into vessel 4 is chemically stable and is capable of being bottled and left on the shelf for prolonged periods without the formation of precipitates which form sediments therein.

On the other hand, some of the liquid fed into the cyclones is discharged via discharge ports 18 along with any crystalline solid which may have been contained therein. As disclosed hereinbefore, by selectively conditioning the valve arrangements 30 and 30' it is possible to direct the crystal-containing liquid back to port 15 of the crystallizer vessel 5 or deliver the same to the separator 29.

In this instance the crystalline solid containing discharge from the cyclones is recycled to the crystallizer vessel 5 and tends to maintain an essentially constant amount of seed crystals in the system without the need of periodically replenishing the same from the suspension generating vessels 25.

With the system conditioned in the above manner it is possible to continuously purify wines, grape juice and the the like liquids in a manner which reduces the concentrations of tartars to levels required in high quality products.

Subsequently and/or alternatively, it is possible to operate the system in batch processing mode. For example, when all of the source liquid in the vessel 1 is exhausted, for example, valves 30, 30' and 31, 32 are set in a manner which establishes fluid communication between the inlet port 19 of the cyclone arrangement and the lowermost port 13 of the crystallizer vessel 5. This permits the final portion of the source liquid which is contained in the crystallizer vessel 5 and which has been treated therein to be drained and pumped into the multi-cyclone separator 3.

Following separation of the crystals in the cyclones of the multi-cyclone arangement 3, the purified product is directed to vessel 4 via conduit 22 and the upper discharge ports 17. Valves 30 and 30' are suitably conditioned to close off communication between the discharge ports 18 of the cyclone arrangement and port 15 of the crystallizer and direct the relatively large amount of separated crystals to the separator 29. The screw decanter type separator 29 separates the input into a clear liquid which can be supplied to the storage vessel 4 via pump P3 and a suspension in which the crystals are concentrated and which is supplied to the suspension generating vessels 25 via pump P2.

### (Example)

100 kl of source liquid was filled into the storage vessel 1 and was supplied at at rate of 20kl/HR via conduit 20 into the crystallizer 2. The flow was cooled to approximately -3°C in a plate type cooling device. In this instance a crystallizer vessel 5 having a capacity of 20kl was used. The draft tube 6 used was 150cm long and 150cm in diameter. The vessel 5 was approximately 3m in diameter and was filled to a depth of approximately 3m. The surface of the liquid was arranged to be about 1m above the upper level of the draft tube 6.

The coolant directed through the cooling jacket 16 was arranged to maintain the temperature of the liquid in the separator at -3°C. The seed used was potassium hydrogentartarate. 60kg was supplied through conduit 26 via valve arrangement 30 into the crystallizer via port 15. Valve arrangement 30 was then closed and motor 12 was energized to rotate the stirring elements 9, 10 and 10' at less than 100RPM. A flow rate of 0.6 m/hr was induced in the liquid moving upwardly about the exterior of the draft tube. The overflow from port 14 was collected in buffer tank 28 and subsequently pumped via pump 33 to the inlet port 19 of the multi-cyclone arrangement 3. The clear liquid discharge from the upper discharge ports 17 of the multi-cyclone arrangement 3 was directed to final product storage tank 4. The discharge from the lower ports 18 was directed via conduit 23 back to port 15 of the crystallizer vessel 5. Using this recirculation a tartar concentration of greater than 3 g/l was maintained in the crystallizer 2.

After 5 hours the supply of source liquid was exhausted and 80 Kl of purified wine was collected in the storage vessel 4.

Following this, the conditioning of the system was changed from a continuous processing circuit to a batch processing type. That is to say, valve 31 was conditioned to establish communication between conduit 24 and the inlet port 13 of the crystallizer vessel 5 and valve arrangement 32 was set to close conduit 21 and to establish communication between conduit 24 and the induction port 19 of the cyclone arrangement 3.

After this, valve arrangement 30 was conditioned to block communication between conduits 23 and 26, and valve arrangement 30' was conditioned to establish communication between the lower discharge ports 18 of the cyclone arrangement 3 and the induction port (no numeral) of the screw decanter type separator 29. With the system thus conditioned for batch processing, pump 33 was energized and liquid was inducted from the cyrstallizer vessel 5 via port 13 and pumped into the induction port 19 of the multi-cyclone arrangement 3.

The multi-cyclone arrangement 3 separated the input into a clear liquid which was discharged via the upper discharge ports 17 and delivered into the storage vessel 4 by way of conduit 22.

On the other hand, crystal containing liquid discharged via the lower ports 18 was fed to the screw decanter type separator 29. In this device the input was separated into a clear fraction which was fed to the storage vessel 4 by way of pump P3 and conduit 38, and a fraction containing the crystals which was pumped to the suspension generating tanks 25 by way of pump P2.

Upon completion of this operation 100 kl of wine was found to be contained in the finished product storage vessel 4.

Thus, as will be appreciated from the above disclosure, the system of the present invention is capable of both continous and batch processing of wine and like liquids in a manner which removes tartars and the like to the degree which ensures that undesired precipitation will not occur while the product is standing on shelves after bottling.

If desired the system may be maintained in the continous processing mode by adding fresh source liquid to the source liquid storage vessel 1.

Alternatively, the system may be operated in the batch mode in the event that the amount of source liquid to be processed is relatively small and of the order of the capacity of the crystallizer vessel 5.

## Claims

1. A processing system for removing crystallizable material from liquid, the system comprising a source liquid vessel (1) for storing source liquid, a crystallizer (2), a finished product vessel (4) for receiving and storing processed liquid from which crystallizable material has been removed, and a first separating arrangement (3) interposed between the crystallizer (2) and the finished product vessel (4), said first separating arrangement being arranged to separate the liquid from the crystallizer into a first clear fraction and a second fraction containing crystalline solid, characterised in that the system further comprises a second separator (29) fluidly connected with said first separating arrangement (3) for receiving the second fraction and for separating it into a second clear fraction for supply to the finished product vessel (4) and a fraction concentrated with crystalline solid, and valve and conduit means including a valve arrangement (30, 30') for directing the first clear fraction from the first separating arrangement (3) to the finished product vessel (4) and for selectively guiding the second fraction either back to the crystallizer (2) or to said second separator (29).

2. A processing system as claimed in claim 1, wherein the crystallizer (2) includes a crystallizer vessel (5), a draft tube (6) supported in a relatively low position in the vessel, a mixing arrangement (8, 9, 10, 10') for inducing a flow which passes in a first direction through the draft tube and returns via an annular passage defined between the vessel (5) and the exterior of the draft tube (6), a cooling jacket (16) disposed about at least the lower portion of the vessel (5), an inlet port (13) located near the bottom of the vessel and an overflow discharge port (14) located proximate the top of the vessel (5) to permit liquid containing crystalline solid to be tapped off.

3. A processing system as claimed in claim 2, wherein said valve and conduit means (31, 24, 32) is conditionable to permit liquid in the crystallizer (2) to be supplied via the inlet port (13) to an induction port (19) of said first separating arrangement (3) instead of via the overflow discharge port (14).

4. A processing system as claimed in claim 2 or claim 3, further comprising a cooling device (27), for cooling the source liquid supplied from the source liquid vessel (1) to the inlet port (13) of the crystallizer vessel (5).

5. A processing system as claimed in any of the preceding claims, wherein said second separator (29) is a screw decanter type separator.

6. A processing system as claimed in any of the preceding claims, further comprising suspension tanks (25) for the preparation therein of a suspension containing the crystalline solid to be extracted from the liquid, said suspension tanks (25) being selectively connectable through the valve and conduit means to said crystallizer (2), for delivering crystal-containing liquid thereto, or to said second separator (29) for receiving therefrom the fraction concentrated with crystalline solid.

7. A processing system as claimed in any of the preceding claims, characterised in that said first separating arrangement (3) takes the form of a multi-cyclone.

8. A method of removing crystallizable material from liquid, the method comprising:
storing source liquid in a source liquid vessel (1);
receiving and storing processed liquid in a finished product vessel (4);
removing a substance from the source liquid using a crystallizer (2);
separating the liquid from the crystallizer (2) into a first clear fraction and a second fraction containing crystalline solid using a first separating arrangement (3) interposed between the crystallizer (2) and the finished product vessel (4); and
directing the first clear fraction to the finished product vessel (4);
characterised in that the method further comprises using valve and conduit means including a valve arrangement (30, 30') to selectively guide the second fraction either back to the crystallizer (2) or to a second separator (29) and, when the second fraction is being guided to the second separator (29), separating the second fraction in the second separator into a second clear fraction and a fraction concentrated with crystalline solid, directing the second clear fraction to the finished product vessel (4) and directing the fraction concentrated with crystalline solid to suspension generating tanks (25).

9. A method as claimed in claim 8, further comprising:
preparing in suspension generating tanks (25) a suspension containing the crystalline solid to be extracted from the liquid; and
selectively supplying the suspension from the suspension tanks (25) through said valve and conduit means to the crystallizer (2).

10. A method as claimed in claim 8 or claim 9, comprising operating the valve and conduit means (31, 24, 32) to permit liquid in the crystallizer (2) to be supplied via an inlet port (13) located near the bottom of a crystallizer vessel (5) of the crystallizer (2) to an induction port (19) of the first separating arrangement (3) as an alternative to supply via an overflow discharge port (14) of the crystallizer (2).

11. A method as claimed in claim 10, further comprising cooling the source liquid supplied from the source liquid vessel (1) to the inlet port (13) of the crystallizer vessel (5) in a cooling device (27) fluidly interposed between the source liquid storage vessel (1) and the crystallizer (2).

12. A method as claimed in claim 8 using a processing system as claimed in any of claims 1 to 7.

## Patentansprüche

1. Verarbeitungssystem zum Entfernen von kristallisierbarem Material aus Flüssigkeit, wobei das System einen Ausgangsflüssigkeitskessel (1) zur Speicherung von Ausgangsflüssigkeit, einen Kristallisierer (2), einen Endproduktkessel (4) zur Aufnahme und Speicherung von verarbeiteter Flüssigkeit, von der kristallisierbares Material entfernt wurde, und eine erste, zwischen dem Kristallisierer (2) und dem Endproduktkessel (4) angeordnete Trennanordnung (3) umfaßt, wobei die erste Trennanordnung ausgelegt ist, die Flüssigkeit von dem Kristallisierer in einen ersten klaren Bestandteil und einen zweiten, kristalline Festkörper enthaltenen Bestandteil zu trennen, dadurch gekennzeichnet, daß das System ferner umfaßt einen zweiten Abscheider (29), der mit der ersten Trennanordnung (3) in Fluidverbindung steht, um den zweiten Bestandteil zu empfangen und um ihn in einen zweiten klaren Bestandteil zur Zuleitung in den Endproduktkessel (4) und einen mit kristallinem Festkörper konzentrierten Bestandteil zu trennen, und Ventil und Leitmittel, die eine Ventilanordnung (30, 30') enthalten, um den ersten klaren Bestandteil von der ersten Trennanordnung (3) zu dem Endproduktkessel (4) zu leiten und um den zweiten Bestandteil wahlweise entweder zurück zu dem Kristallisierer (2) oder zu dem zweiten Abscheider (29) zu führen.

2. Verarbeitungssystem nach Anspruch 1, in dem der Kristallisierer (2) umfaßt einen Kristallisierkessel (5), ein Saugrohr (6), das in einer verhältnismäßig niedrigen Lage in dem Kessel getragen ist, eine Mischanordnung (8, 9, 10, 10'), um einen Fluß herbeizuführen, der das Saugrohr in einer ersten Richtung durchläuft und über einen ringförmigen Durchgang, der zwischen dem Kessel (5) und dem Äußeren des Saugrohres (6) definiert ist, zurückkehrt, eine Kühlhülle (16), die zumindest um den unteren Teil des Kessels (5) angeordnet ist, einen Einlaßzugang (13), der sich nahe dem Boden des Kessels befindet und einen Überlaufablaßzugang (14), der sich in der Nähe des oberen Endes des Kessels (5) befindet, um zu ermöglichen, daß Flüssigkeit, die kristallinen Festkörper enthält, abgelassen wird.

3. Verarbeitungssystem nach Anspruch 2, in dem das Ventil und Leitmittel (31, 24, 32) betreibbar ist, in dem Kristallisierer (2) befindliche Flüssigkeit über den Einlaßzugang (13) statt über den Überlaufauslaßzugang (14) zu einem Einleitzugang (19) der ersten Trennanordnung (3) zu führen.

4. Verarbeitungssystem nach Anspruch 2 oder Anspruch 3, das ferner umfaßt ein Kühlgerät (27), um die Ausgangsflüssigkeit, die von dem Ausgangsflüssigkeitskessel (1) zu dem Einlaßzugang (13) des Kristallisierkessels (5) geführt wird, zu kühlen.

5. Verarbeitungssystem nach einem der vorangegangenen Ansprüche, in dem der zweite Abscheider (29) ein Abscheider vom Schraubendekantiertyp ist.

6. Verarbeitungssystem nach einem der vorhergehenden Ansprüche, das weiterhin umfaßt Suspensionsbehälter (25), um darin eine Suspension vorzubereiten, die den der Flüssigkeit zu entziehenden kristallinen Festkörper enthält, wobei die Suspensionsbehälter (25) wahlweise entweder über das Ventil und Leitmittel mit dem Kristallisierer (2) verbindbar sind, um diesem die Kristall enthaltende Flüssigkeit zu liefern, oder mit dem zweiten Abscheider (29) verbindbar sind, um von diesem den mit kristallinem Festkörper konzentrierten Bestandteil zu empfangen.

7. Verarbeitungssystem nach einem der vorangegangenen Ansprüche, dadurch gekennzeichnet, daß die erste Trennanordnung (3) die Form eines Multizyklons aufweist.

8. Verfahren zum Entfernen von kristallisierbarem Material aus Flüssigkeit, das umfaßt:
die Speicherung einer Ausgangsflüssigkeit in einem Ausgangsflüssigkeitskessel (1);
den Empfang und die Speicherung von verarbeiteter Flüssigkeit in einem Endproduktkessel (4);
das Entfernen einer Substanz von der Ausgangsflüssigkeit unter Verwendung eines Kristallisierers (2);
die Trennung der Flüssigkeit von dem Kristallisierer (2) in einen ersten klaren Bestandteil und einen zweiten, kristallinen Festkörper enthaltenden Bestandteil unter Verwendung einer ersten Trennanordnung (3), die zwischen dem Kristallisierer (2) und dem Endproduktkessel (4) angeordnet ist; und
dem Leiten des ersten klaren Bestandteils zu dem Endproduktkessel (4);
dadurch gekennzeichnet, daß das Verfahren ferner umfaßt
die Verwendung eines Ventil- und Leitmittels, das enthält eine Ventilanordnung (30, 30'), um den zweiten Bestandteil wahlweise entweder zurück zu dem Kristallisierer (2) oder zu einem zweiten Abscheider (29) zu leiten, und, falls der zweite Bestandteil zu dem zweiten Abscheider (29) geleitet wird, den zweiten Bestandteil in dem zweiten Abscheider in einen zweiten klaren Bestandteil und einen mit kristallinem Festkörper konzentrierten Bestandteil zu trennen, den zweiten klaren Bestandteil zu dem Endproduktkessel (4) zu leiten und den mit kristallinem Festkörper konzentrierten Bestandteil zu den suspensionserzeugenden Behältern (25) zu leiten.

9. Verfahren nach Anspruch 8, das ferner umfaßt:
die Vorbereitung einer den von der Flüssigkeit zu extrahierenden kristallinen Festkörper enthaltenden Suspension in den suspensionserzeugenden Behältern (25); und
der wahlweisen Zufuhr der Suspension von den Suspensionsbehältern (25) über das Ventil- und Leitmittel zu dem Kristallisierer (2).

10. Verfahren nach Anspruch 8 oder Anspruch 9, das umfaßt das Betreiben des Ventil- und Leitmittels (31, 24, 32), um zu ermöglichen, daß in dem Kristallisierer (2) befindliche Flüssigkeit über den sich in der Nähe des Bodens eines Kristallisierkessels (5) des Kristallisierers (2) befindenden Einlaßzugangs (13) zu einem Einleitzugang (19) der ersten Trennanordnung (3) als eine Alternative der Zufuhr über einen Überlaufauslaßzugang (14) des Kristallisierers (2) zugeführt wird.

11. Verfahren nach Anspruch 10, das ferner das Kühlen der Ausgangsflüssigkeit, die von dem Ausgangsflüssigkeitskessel (1) zu dem Einlaßzugang (13) des Kristallisierkessels (5) geführt wird, in einem Kühlgerät (27), das in Fluidverbindung zwischen dem Ausgangsflüssigkeitsspeicherkessel (1) und dem Kristallisierer (2) angeordnet ist, umfaßt.

12. Verfahren nach Anspruch 8 unter Verwendung eines Verarbeitungssystems nach einem der Ansprüche 1 bis 7.

## Revendications

1. Système de traitement afin d'enlever des matières cristallisables hors d'un liquide, le système comprenant une enceinte (1) pour un liquide source, afin de stocker du liquide source, un cristalliseur (2), une enceinte (4) pour produits finis, afin de recevoir et de stocker du liquide traité hors duquel on a enlevé les matières cristallisables, et un premier agencement de séparation (3) interposé entre le cristalliseur (2) et l'enceinte à produits finis (4), ledit premier agencement de séparation étant agencé de manière à séparer le liquide du cristalliseur en une première fraction claire et une seconde fraction qui contient des solides cristallins, caractérisé en ce que le système comprend en outre un second séparateur (29) relié en ce qui concerne le fluide audit premier agencement séparateur (3) afin de recevoir la seconde fraction et de la séparer en une seconde fraction claire destinée à être alimentée vers l'enceinte (4) à produits finis, et une fraction concentrée avec des solides cristallins, et des moyens formant valves et formant conduits, comprenant un agencement à valve (30, 30') afin de mener la première fraction claire depuis le premier agencement de séparation (3) vers l'enceinte (4) à produits finis, et pour guider de façon sélective la seconde fraction soit en retour vers le cristalliseur (2), soit vers ledit second séparateur (29).

2. Système de traitement selon la revendication 1, dans lequel le cristalliseur (2) comprend un récipient de cristallisation (5), un tube de tirage (6) supporté dans une position relativement basse dans le récipient, un agencement de mélange (8, 9, 10, 10') afin d'induire un écoulement qui passe dans une première direction à travers le tube de tirage et qui retourne via un passage annulaire défini entre le récipient (5) et l'extérieur du tube de tirage (6), une chemise de refroidissement (16) disposée autour d'au moins la partie inférieure du récipient (5), un orifice d'entrée (13) situé au voisinage du fond du récipient et un orifice de décharge par trop-plein (14) situé au voisinage du sommet du récipient (5) afin de permettre au liquide qui contient des solides cristallins d'être prélevé.

3. Système de traitement selon la revendication 2, dans lequel lesdits moyens formant valves et formant conduits (31, 24, 32) peuvent être disposés de manière à permettre de fournir le liquide dans le cristalliseur (2) via l'orifice d'entrée (13) à un orifice d'induction (19) dudit premier agencement de séparation (3) au lieu de l'être via l'orifice de décharge par trop-plein (14).

4. Système de traitement selon l'une ou l'autre des revendications 2 et 3, comprenant en outre un dispositif de refroidissement (27), destiné à refroidir le liquide source fourni depuis l'enceinte (1) de liquide source à l'orifice d'entrée (13) du récipient de cristallisation (5).

5. Système de traitement selon l'une quelconque des revendications précédentes, dans lequel ledit second séparateur (29) est un séparateur du type à décantation à vis.

6. Système de traitement selon l'une quelconque des revendications précédentes, comprenant en outre des réservoirs à suspension (25) destinés à la préparation dans ceux-ci d'une suspension contenant le solide cristallin qui doit être extrait hors du liquide, lesdits réservoirs à suspension (25) pouvant être reliés de façon sélective par l'intermédiaire des moyens formant valves et formant conduits soit audit cristalliseur (2), afin de fournir dans celui-ci du liquide qui contient des cristaux, soit audit second séparateur (29) afin de recevoir de celui-ci la fraction concentrée avec le solide cristallin.

7. Système de traitement selon l'une quelconque des revendications précédentes, caractérisé en ce que ledit premier agencement de séparation (3) prend la forme d'un multi-cyclone.

8. Procédé d'enlèvement de matières cristallisables hors d'un liquide, le procédé comprenant les étapes consistant à :
- stocker un liquide source dans une enceinte (1) de liquide source;
- recevoir et stocker du liquide traiter dans une enceinte (4) de produits finis;
- enlever une substance hors du liquide source en utilisant un cristalliseur (2);
- séparer le liquide du cristalliseur (2) en une première fraction claire et une seconde fraction contenant un solide cristallin, en utilisant un premier agencement de séparation (3) interposé entre le cristalliseur (2) et l'enceinte (4) de produits finis ; et
- envoyer la première fraction claire vers l'enceinte (4) de produits finis; caractérisé en ce que le procédé comprend en outre les étapes consistant à utiliser des moyens formant valves et formant conduits, qui comprennent un agencement de valves (30, 30') afin de mener sélectivement la seconde fraction soit en retour vers le cristalliseur (2) soit vers un second séparateur (29), et lorsque la seconde fraction est menée vers le second séparateur (29), pour séparer la seconde fraction dans le second séparateur en une seconde fraction claire et une fraction concentrée avec le solide cristallin, à envoyer la seconde fraction claire vers l'enceinte (4) de produits finis et envoyer la fraction concentrée avec le solide cristallin vers des réservoirs de production de suspension (25).

9. Procédé selon la revendication 8, comprenant en outre les étapes à :
- préparer dans les réservoirs de production de suspension (25) une suspension qui contient le solide cristallin qui doit être extrait hors du liquide ; et
- fournir de manière sélective la suspension provenant des réservoirs de suspension (25) via lesdits moyens formant valves et formant conduits au cristalliseur (2).

10. Procédé selon l'une ou l'autre des revendications 8 et 9, comprenant le fait d'actionner les moyens formant valves et formant conduits (31, 24, 32) de manière à permettre la fourniture du liquide dans le cristalliseur (2) via un orifice d'entrée (13) situé au voisinage du fond d'un récipient de cristallisation (5) du cristalliseur (2) vers un orifice d'induction (19) du premier agencement de séparation (3) en tant que variante à la fourniture via un orifice de décharge par trop-plein (14) du cristalliseur (2).

11. Procédé selon la revendication (10), comprenant en outre l'étape consistant à refroidir le liquide source fourni depuis l'enceinte de liquide source (1) vers l'orifice d'entrée (13) du récipient de cristallisation (5) dans un dispositif de refroidissement (27) interposé dans le circuit de fluide entre l'enceinte de stockage (1) du liquide source et le cristalliseur (2).

12. Procédé selon la revendication 8, utilisant un système de traitement selon l'une quelconque des revendications 1 à 7.
